# EUROPÄISCHE PATENTSCHRIFT

(11) **EP 0 472 922 B1**
(45) Veröffentlichungstag und Bekanntmachung des Hinweises auf die Patenterteilung: **28.09.1994**
(21) Anmeldenummer: 91112594.6
(22) Anmeldetag: 26.07.1991
(51) Int. Cl.: H01M 8/18, H01M 8/04

(54) **Verfahren zur Energiespeicherung und Energiewandlung in einer regenerierbaren Brennstoffzelle mit Ionenaustauschermembran**
Process for storing and converting energy in a regenerative fuel cell with ion-exchange membrane
Procédé pour l'emmagasinage et le stockage d'énergie dans une pile à combustible régénérable avec membrane d'échange d'ions

(30) Priorität: 31.08.1990 DE 4027655
(43) Veröffentlichungstag der Anmeldung: 04.03.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Ahn, Jochen, Dipl.-Chem., W-7800 Freiburg (DE); Ledjeff, Konstantin, Dr. Dipl.-Phys., W-7812 Bad Krozingen (DE)

(56) Entgegenhaltungen:
- US-A- 3 134 697
- PROCEEDINGS OT THE 34TH INTERNATIONAL POWER SOURCES SYMPOSIUM 25. Juni 1990,NEW JERSEY Seiten 403 - 407; J. F. MCELROY ET ALL: 'SPE HYDROGEN/OXYGEN FUELCELLS FOR RIGOROUS NAVAL APPLICATIONS'
- JOURNAL OF POWER SOURCES. Bd. 29, Nr. 3/4, Februar 1990, LAUSANNE CH Seiten 399- 412; R. BALDWIN ET ALL: 'HYDROGEN-OXYGEN PROTON-EXCHANGE MEMBRANE FUEL CELLSAND ELECTROLYZERS'
- PROCEEDINGS OF THE EUROPEAN SPACE POWER CONFERENCE 2-6 OCTOBER 1989 MADRID,SPAIN ESA SP-294 Bd. 1, August 1989, MADRID, SPAIN Seiten 227 - 231; A.LEONIDA: 'HYDROGEN/OXYGEN SPE ELECTROCHEMICAL DEVICES FOR ZERO-G APPLICATIONS'

## Beschreibung

Die Erfindung betrifft ein Verfahren zur Energiespeicherung und -Wandlung mittels einer Zelle bestehend aus einem Anodenraum, einem Kathodenraum und einer Ionenaustauschermembran als Elektrolyt.

Zellen dieser Art sind bekannt. So beschreibt u.a. die US 4,175,165 eine derartige Zelle mit einer speziellen Ionenaustauschermembran als Elektrolyt. Weitere Zellen sind beschrieben in US 3,779,811, US 3,297,484 und in US 4,529,670. Alle diese Zellen bestehen aus einem Anodenraum, einem Kathodenraum sowie einer Ionenaustauschermembran als Elektrolyt in den verschiedensten Ausgestaltungen.

Derartige Zellen werden hauptsächlich als Brennstoffzellen verwendet. Dieses sind galvanische Zellen, die kontinuierlich die chemische Energieänderung einer Brennstoffoxidationsreaktion in elektrische Energie umwandeln. Bei der "heißen" Verbrennung im Ofen läuft der Elektronenübergang vom Brennstoffmolekül (meist Wasserstoff) als Donator zum Oxidatormolekül (meist Sauerstoff) als Akzeptor irreversibel im Kurzschluß des direkten Kontaktes der Reaktionspartner unter Wärmeentwicklung. Bei der "kalten" Verbrennung in der Brennstoffzelle dagegen verläuft er weitergehend reversibel an zwei getrennten Orten: an der negativen Elektrode (Anode) streifen die Brennstoffmoleküle unter Bildung von positiven Brennstoffionen im umgebenden Elektrolyten Elektronen ab, an der (positven) Kathode bilden die Oxidatormoleküle unter Aufnahme von Elektronen negative Oxidatorionen im Elektroyten. Schließt man nun Anode und Kathode über einen elektrischen Verbraucher, so läuft die Oxidationsreaktion in dem Maße ab, wie Strom vom Verbraucher angefordert wird. Der größte Teil der Reaktionswärme wird dabei bei der kalten Verbrennung in der Brennstoffzelle als hochwertige elektrische Energie im Verbraucher verfügbar. Brennstoff und Oxidatorionen wandern im Elektrolyten und vereinigen sich dort unter Schließung des Stromkreises zum Reaktionsprodukt (im Falle von Wasserstoff/Sauerstoff zu Wasser).

Wie bereits ausgeführt, verlaufen die Verfahrensschritte im Wasserstoff/Sauerstoff-Brennstoffzellenaggregat reversibel, so daß sie umgekehrt werden können. In diesem Fall wird dann aus dem Brennstoffzellenaggregat ein Elektrolyseur, der die Elektrolysegase Wasserstoff und Sauerstoff gegen einen gewissen Überdruck in Freiheit setzt.
Es hat deshalb nicht an Versuchen gefehlt, eine derartige Zelle zur gleichzeitigen Energiewandlung und Energiespeicherung einzusetzen, zumal die Speicherung elektrische Energie über längere Zeiträume, z.B. ein Jahr, wie es zur Nutzung von Sonnenenergie notwendig ist, bei Verwendung von Sekundärelementen sehr teuer ist und wegen der, bei den langen Zeiträumen großen Selbstentladung, mit einem schlechten Wirkungsgrad verbunden ist.

Die in der Literatur (z.B. Hydrogen/Oxygen SPE^{R} electrochemical devices for Zero-G applications, Proceedings of the European Space Power Conference; Madrid, Spanien, 2-6 Oktober 1989), bisher beschriebenen Ansätze zur Entwicklung einer solchen Brennstoffzelle, die gleichzeitig zur Energiewandlung und Energiespeicherung benutzt wird, geht dabei immer von einer bifunktionellen Sauerstoffelektrode und einer bifunktionellen Wasserstoffelektrode aus. D.h., an einer Elektrode läuft im Elektrolysefall die Sauerstoffentwicklung und im Brennstoffzellenfall die Sauerstoffreduktion. An der anderen Elektrode im Elektrolysefall die Wasserstoffentwicklung und im Brennstoffzellenfalls die Wasserstoffoxidation ab.

Diese Anordnung zeigt aber für die Realisierung einer solchen Zelle mit einer Kationenaustauschermembran als Elektrolyt zwei prinzipielle Schwierigkeiten. Aufgrund der Katalysatorauswahl für die Sauerstoffelektrode, muß ein Wirkungsgradverlust hingenommen werden, da das zur Sauerstoffreduktion notwendige Platin bei der Sauerstoffentwicklung nicht den besten Elektrokatalysator darstellt und somit den Elektrolyse-Wirkungsgrad verschlechtert. Zum Ablauf der Sauerstoffreduktion in Brennstoffzellen mit Kationenaustauschermembranen, ist zudem zum Abtransport des Reaktions- und Transferwassers eine hydrophobe Schicht, z.B. in Form eines hydrophobierten Graphitpapiers am Elektrokatalysator notwendig. Bei der Elektrolyse wird dieses hydrophobierte Graphitpapier aufgrund des hohen anodischen Potentials der Sauerstoffentwicklung jedoch durch anodische Oxidation aufgelöst.

Es stellt sich daher das Problem, ein Verfahren zur Energiewandlung und zur Energiespeicherung, mit einem H₂/O₂/H₂O - System, mittels einer Zelle mit einer Ionenaustauschermembran als Elektrolyt anzugeben, das sowohl bei der Speicherung elektrischer Energie über längere Zeit (z.B. ein Jahr) oder über kürzere Zeiträume einen hohen Wirkungsgrad aufweist und das gleichzeitig eine Energiewandlung ermöglicht.

Das Problem wird dadurch gelöst, daß ein Verfahren vorgeschlagen wird, das mit einer Brennstoffzelle, mit einer Ionenaustauschermembran als Elektrolyt durchgeführt wird, wobei als Elektroden im Anodenraum eine bifunktionelle Oxidationselektrode verwendet wird, so daß im Elektrolysefall die Sauerstoffentwicklung und im Brennstoffzellenfall die Wasserstoffoxidation abläuft und daß im Kathodenraum eine bifunktionelle Reduktionselektrode verwendet wird, so daß im Elektrolysefall die Wasserstoffentwicklung und im Brennstoffzellenfall die Sauerstoffreduktion abläuft.

Im Gegensatz zum Stand der Technik, läuft demnach an einer Elektrode, z.B. im Elektrolysefall, nicht die Sauerstoffentwicklung und im Brennstoffzellenfall die Sauerstoffreduktion ab sondern beim Wechsel der Betriebsart zwischen Elektrolyse und Brennstoffreaktion wird im Anodenraum und Kathodenraum jeweils die Art des Gases zwischen Sauerstoff und Wasserstoff gewechselt, d.h. an einer Elektrode läuft im Elektrolysefall die Sauerstoffentwicklung und im Brennstoffzellenfall die Wasserstoffoxidation, an der anderen Elektrode im Elektrolysefall die Wasserstoffentwicklung und im Brennstoffzellenfall die Sauerstoffreduktion ab. Erfindungsgemäß verwendet deshalb das anmeldungsgemäße Verfahren derartige bifunktionelle Oxidations- und Reduktionselektroden. Durch die Verwendung solcher bifunktionellen Elektroden läßt sich aufgrund der Möglichkeit, eine für beide Reaktionen einer bifunktionellen Elektrode geeigneteren Katalysator auswählen zu können, ein besserer Speicherwirkungsgrad erreichen. So läßt sich für die Oxidationselektrode mit z.B. Rhodium- oder Iridiumoxid ein zur Sauerstoffentwicklung wesentlich besserer Katalysator als wie es Platin ist benutzen. Zur Wasserstoffoxidation ist dagegen keine Verschlechterung von Rhodium- oder Iridiumoxyd als Elektrokatalysator gegenüber Platin zu verzeichnen. Zusätzlich wird bei diesen bifunktionellen Elektroden das bei der Sauerstoffreduktion benötigte hydrophobierte Graphitpapier nicht durch anodische Oxidation zerstört. Damit lassen sich mit der Verwendung solcher bifunktionellen Oxidations- und Reduktionselektroden die beiden größten Schwierigkeiten bei dem Bau einer elektrochemischen Zelle mit Kationenaustauschermembran als Elektrolyt und möglicher wechselnder Benutzung als Wasserelektrolyseur und H₂/O₂-Brennstoffzelle umgehen.

Vorteilhafterweise wird nun eine derartige Zelle, die mit den eingangs beschriebenen bifunktionellen Oxidations- bzw. Reduktionselektroden versehen ist, so betrieben, daß im Elektrolysebetrieb Wasser durch den Anodenraum geführt wird und der dadurch entstehende Sauerstoff und Wasserstoff in entsprechenden Speichern gespeichert wird und daran die Zelle bei Bedarf im Anschluß als Brennstoffzelle betrieben wird und der Wasserstoff und Sauerstoff dazu einem Speicher entnommen wird, wobei dann der Wasserstoff durch den Anodenraum und der Sauerstoff durch den Kathodenraum geführt wird. Die jeweiligen Elektrolyse- bzw. Brennstoffzyklen können beliebig oft wiederholt werden. Die Dauer der Zyklen richtet sich dabei nach den jeweiligen Anforderungen und der Auslegung der Zelle. Im Bereich der Nutzung regenerierbarer Energie ist es durchaus möglich, daß eine Speicherung bis zu einem Jahr vorgenommen wird und dann erst der Brennstoffzellenzyklus beginnt. Andererseits sind genauso auch Zyklen in der Größenordnung von Minuten bis zu Stunden für die entsprechenden Anforderungen durchführbar.

Erfindungsgemäß ist es genauso möglich, daß der Wasserstoff bzw Sauerstoff nicht in einem ersten Verfahrensschritt zuerst durch eine Elektrolyse erzeugt wird sondern, daß der Wasserstoff und Sauerstoff einem externen Gasspeicher, z.B. natürlichen Gasvorkommen, entnommen wird. Der Wasserstoff/Sauerstoff wird dann der Zelle zugeführt und die Zelle wird im Anschluß daran als Brennstoffzelle betrieben, d.h. Wasserstoff wird durch den Anodenraum und Sauerstoff durch den Kathodenraum geführt. Im Anschluß daran wird dann die Zelle als Elektrolyseur betrieben, wobei wiederum, wie bereits oben ausgeführt, Wasserstoff durch den Anodenraum geführt wird und der entstehende Sauerstoff und Wasserstoff gespeichert wird. Im Anschluß daran können sich dann wieder die Brennstoffzellen- sowie Elektrolysezyklen anschließen.

Vorteilhafterweise wird während des Elektrolyszyklus das destillierte Wasser von einem Wasserbehälter aus im Kreislauf durch den Anodenraum geführt. Wobei vorgesehen ist, daß im Bedarfsfall Wasser von einer externen Quelle in den Wasserbehälter geführt werden kann, was dann der Fall sein wird, wenn Wasserverluste durch Verdampfung auftreten.

In einer weiteren vorteilhaften Ausgestaltung ist vorgesehen, daß während des Elektrolysezyklusses der im Anodenraum entstehende Sauerstoff, der vom im Kreislauf zirkulierenden Wasser mitgeschleppt wird, in einem nachgeschalteten Gasabscheider vom Wasser getrennt wird und dann anschließend der Sauerstoff dem Sauerstoffspeicher zugeführt wird.

In einer weiteren vorteilhaften Ausgestaltung wird der Sauerstoff über einen dem Sauerstoffspeicher vorgeschalteten Gastrockner geführt. Dadurch wird sichergestellt, daß der Sauerstoffspeicher nur getrocknetes Gas enthält, das sofort wieder in den nächsten Zyklus zugeführt werden kann.

Weiterhin wird erfindungsgemäß das Transferwasser, d.h. Wasser, das von den entstandenen Protonen während des Elektrolysezyklusses durch die Ionenaustauschermembran mitgeschleppt wurde, durch einen der Zelle nachgeschalteten Wasserabscheider aus dem System entfernt. Der entstandene Wasserstoff wird dann in einen Wasserstoffspeicher geleitet. Auch im Fall des Wasserstoffs sieht eine vorteilhafte Ausgestaltung vor, daß der Wasserstoff über einen im Gastrockner vorgeschalteten Gastrockner im Wasserstoffspeicher zugeführt wird.

Erfindungsgemäß werden die Betriebsgase während des Brennstoffzellenzyklusses im Kreislauf durch die entsprechenden Kathoden- bzw. Anodenräume geführt. Danach wird Sauerstoff im Kreislauf vom Sauerstoffspeicher aus durch den Kathodenraum und Wasserstoff vom Wasserstoffspeicher aus im Kreislauf durch den Anodenraum geführt. In einer vorteilhaften Ausgestaltung wird der Sauerstoff bzw. der Wasserstoff vor Einleitung in die Zelle durch einen Befeuchter/Kondensator geleitet.

Erfindungsgemäß wird weiterhin beim Wechsel der Betriebsart, d.h. zwischen den einzelnen Elektrolyse- bzw. Brennstoffzellenzyklen eine Spülung der Zelle mit einem Inertgasstrom, z.B. Stickstoff, vorgenommen. Dadurch wird sichergestellt, daß sich keine Restgase aus einem vorangegangenen Zyklus in der Zelle befinden.

Die bei dem erfindungsgemäßen Verfahren verwendete Zelle besitzt , wie gezeigt, speziell ausgebildete bifunktionelle Oxidations- bzw. Reduktionselektroden sowie einen Ionenaustauschermembran als Elektrolyt, eine hydrophobe Struktur, ein Stoffverteilungssystem und Stromkollektoren.

Die bifunktionellen Elektroden sind so ausgestaltet, daß sie aus einer Katalysatorschicht bestehen, die auf die Membran aufgebracht wird und/oder auf einen porösen Träger als stabile Einheit zwischen Stoffverteilungssystem und Membran bzw. hydrophobe Struktur und Membran und/oder auf das Stoffverteilungssystem bzw. die hydrophobe Struktur. Die Katalysatormenge kann dabei zwischen 0,1 und 10 mg/cm² liegen. Als Katalysatoren kommen für beide Seiten Platin, Iridium, Rhodium, Ruthenium, Palladium, Osmium, Rhenium und/oder deren Legierungen und/oder Oxide in Frage. Bevorzugt wird Rhodium und Iridium eingesetzt.

Als hydrophobe Strukturen sind Träger wie Graphit, Kohlegewebe, Metallstrukturen aus Titan, Niob, Tantal oder Zirkonium einsetzbar, die durch Behandlung mit einem perfluorierten Kunststoff hydrophobiert wurden.

Die weiterhin erfindungsgemäß verwendeten Stoffverteilungssysteme sind beispielhaft poröse Sinterkörper aus Titan, Niob, Tantal oder Zirkonium mit einer mittleren Porengröße von 1 - 200 m und einer Dicke von 0,5 - 2mm. Ebenso verwendbar sind feine Drahtnetze aus Titan, Niob, Tantal, Zirkonium oder Platin.

Die verwendeten Stromkollektoren weisen grobe Strukturen aus Titan, Niob, Tantal oder Zirkonium auf, die die mechanische Stabilität zum Zusammenpressen der Zelle besitzen, den Wasser- und Gastransport zu den stoffverteilenden Strukturen ermöglichen und die Stromabnahme erlauben.

Vorteilhafterweise besitzt die Zelle als Elektrolyt eine Ionenaustauschermembran. Als am besten geeignet hat sich hierbei ein Kationenaustauschermembran erwiesen.

Eine derartige Zelle wird nun erfindungsgemäß so betrieben, daß an einer Elektrode im Elektrolysefall die Sauerstoffentwicklung und im Brennstoffzellenfall die Wasserstoffoxidation abläuft und an der anderen Elektrode im Elektrolysefall die Wasserstoffentwicklung und im Brennstoffzellenfall die Sauerstoffreduktion abläuft.

Um diese bifunktionellen Oxidations- bzw. Reduktionslektroden mit den entsprechenden Gasen bzw. H₂O versorgen zu können, ist die Zelle erfindungsgemäß so konstruiert, daß sowohl der Anodenraum wie auch der Kathodenraum geeignete Ein- und Auslässe aufweist. Besonders vorteilhaft ist es, wenn die Ein- bzw. Auslässe mit Regeleinrichtungen wie z.B. Mehrweghähnen verbunden sind. Damit läßt sich sicherstellen, daß bei einer entsprechenden Gasführung für die Zu- und Ableitung zum Wasserreservoir und den Gasspeichern durch einfaches Umstellen eines derartigen Mehrweghahns der Gaswechsel vollzogen werden kann.

Im Falle des Elektrolysebetriebes, wird nun auf der Anodenseite, die an den Pluspol einer geeigneten Gleichspannung angelegt ist, destilliertes Wasser im Kreislauf durch den Anodenraum geführt, welches dann nach H₂O → 1/2 O₂ + 2H⁺ + 2 e⁻ den entstehenden Sauerstoff mitnimmt. Auf der Kathodenseite, die an den Minuspol dieser Gleichspannung angelegt ist, werden die durch die Membran geleiteten Protonen nach 2H⁺ + 2e⁻ → H₂ zu Wasserstoff reduziert. Das von den Protonen durch die Membran mitgeschleppte Transferwasser, welches ebenfalls auf der Kathodenseite austritt, muß vom Wasserstoffgas abgetrennt werden. Zum Wechsel von der Betriebsweise als Wasserelektrolyseur zur Betriebsweise der H₂/O₂-Brennstoffzelle, muß wie folgt vorgegangen werden. Nach Trennen der Zelle von der Stromquelle wird die Zelle so betrieben, daß sich auf der Anodenseite Wasserstoff und auf der Kathodenseite Sauerstoff befindet. Auf der Anodenseite entstehen Protonen nach H₂ → 2H⁺ + 2 e⁻, auf der Kathodenseite entsteht nach 1/2O₂ + 2H⁺ + 2e⁻ → H₂O Wasser. Jedes Gas wird dabei in einem Kreislauf geführt, so daß ein ständiger Gasfluß vorhanden ist. In jedem Kreislauf befindet sich ein Befeuchter/Heizer, der das Gas vor Eintritt in die Zelle auf die erforderliche Temperatur und den erforderlichen Wassergehalt einstellt. Auf der Kathodenseite ist nach der Zelle zusätzlich ein Wasserabscheider notwendig, der das dort anfallende Reaktions- und Transferwasser aufnimmt. Die Anodenseite der Zelle muß nun mit dem Minuspol einer Stromsenke verbunden werden. Bevor die Brennstoffzelle ihre volle Aktivität hat, muß eine 1 - 2 Stunden dauernde Aktivierungsphase eingehalten werden, in der nur ein sehr geringer Strom von ca. 1 mA/cm² gezogen werden darf. Zum Wechsel von Brennstoffzellenbetrieb auf Elektrolysebetrieb muß nun genau umgekehrt vorgegangen werden. Eine Aktivierungsphase ist dann nicht mehr notwendig.

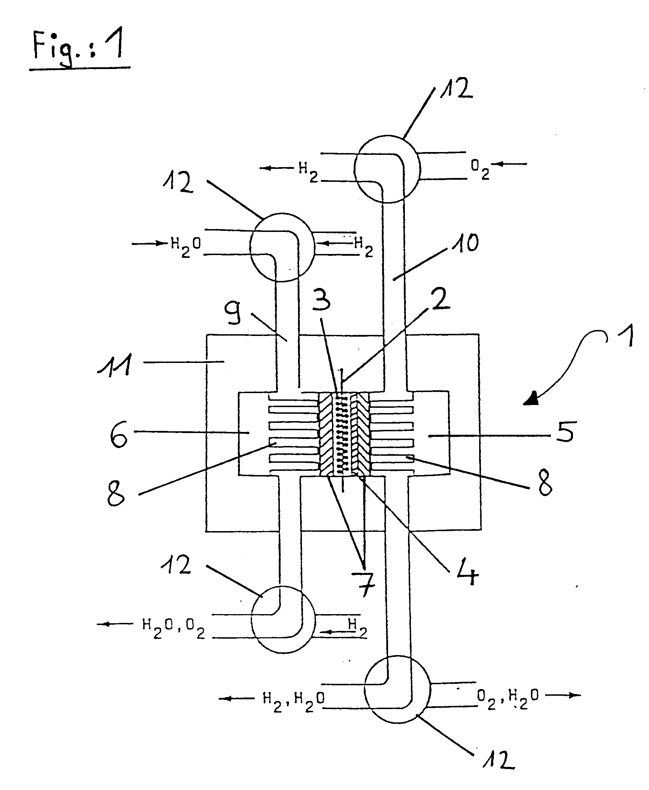

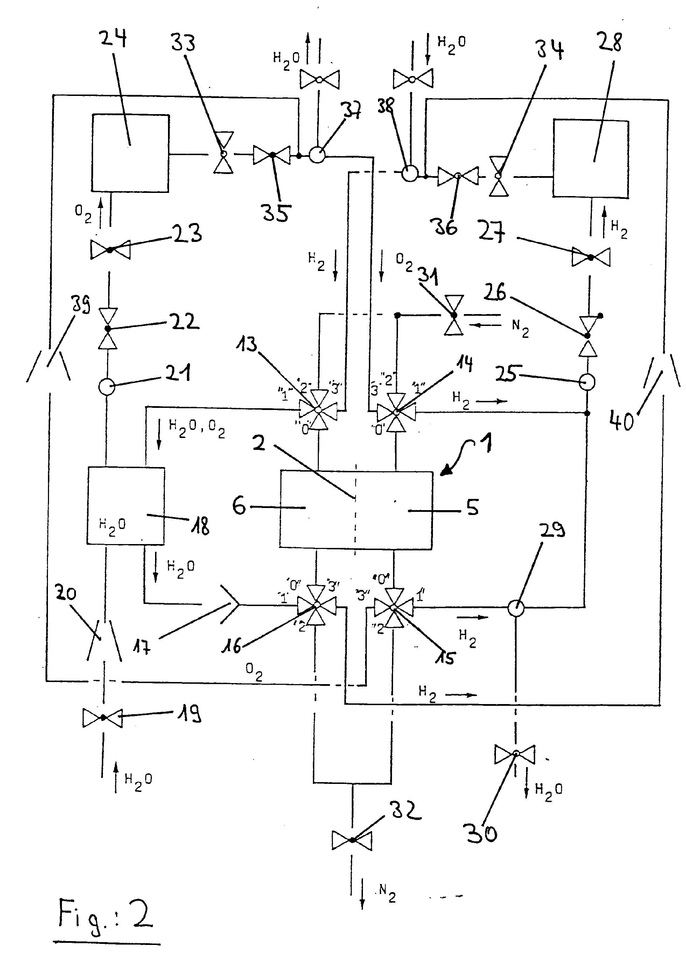

Die Erfindung wird anhand von Figur 1 und 2 sowie anhand von zwei Ausführungsbeispielen näher erläutert:
Fig. 1 zeigt die Zelle,
Fig. 2 zeigt das Verfahrensschema zum Betreiben einer derartigen Zelle.

Fig. 1 zeigt die Zelle (1) wie sie beim erfindungsgemäßen Verfahren verwendet wurde, sie besteht aus einer Kationenaustauschermembran (2), die gleichzeitig als Elektrolyt und Seperator dient und an die beidseitig eine Katalysatorschicht (3) möglichst nahe herangebracht wurde. Auf der Kathodenseite (5) wird direkt auf die Katalysatorschicht eine hydrophobe Struktur (4), z.B. ein hydrophobiertes Graphitpapier gebracht, das dafür sorgt, daß im Brennstoffzellenfall das auf dieser Seite der Kationenaustauschermembran (2) heraustransportierte Reaktions- und Transferwasser nicht die Katalysatorschicht (3) mit einem Wasserfilm belegt, was einen Transport des Sauerstoffgases zum Katalysator stark erschweren bzw. verhindern würden. Auf beiden Seiten der Membran (2) folgt ein Stoffverteilungssystem (7), z.B. aus hochporösen Sintermetallfiltern aus Titan bestehend und einer groben Titanstruktur , die als Stromkollektor (8) dient. Ab- und Antransport der Pro- und Edukte erfolgt über jeweils einen Ein- und Auslaß (9,10) für jeden Elektrodenraum. Die Zelle (1) ist dabei so konstruiert, daß durch Aufeinanderdrücken der Gehäuseteile (11) die Membran (2) gasdicht zwischen Anoden- (6) und Kathodenraum (5) eingebaut ist. Die in der Fig. 1 skizzierten 3-Wege-Hähne (12) beschreiben in der eingezeichneten Stellung den Elektrolysebetrieb.

Fig. 2 zeigt das Verfahrensschema zum Betreiben einer derartigen Zelle. Dieser Verfahrensablauf wird näher erläutert. Anodenraum (6) und Kathodenraum (5) sind an jedem Ein- und Auslaß mit einem 4-Wege-Hahn (13,14,15,16) verbunden. Die als Indices angegebenen Zahlen geben die Position eines solchen Hahnes wieder. Stehen alle 4-Wege-Hähne so, daß Position "O" und "1" verbunden sind, läßt sich durch Anlegen des Pluspols einer Gleichspannung an der Anodenseite (6) und des Minuspols an der Kathodenseite (5) die Zelle (1) als Elektroysezelle betreiben. Durch den Anodenraum (6) zirkuliert im Kreislauf destilliertes Wasser, welches durch eine Pumpe (17) angetrieben wird. Behälter (18) fungiert dabei als Wasserreservoir und Gasabscheider. Über das Ventil (19) läßt sich mit der Druckpumpe (20) während des Elektrolysebetriebs verbrauchtes Wasser zugeben. Über den Gastrockner (21), das Rückschlagventil (22) und das Absperrventil (23) wird der abgeschiedene Sauerstoff im O₂-Tank (24) gespeichert. Der im Kathodenraum (5) entstehende Wasserstoff wird über die Gastrocknung (25) und das Rückschlagventil (26) und Absperrventil (27) in H₂-Tank (28) geleitet.
Das durch die Membran (2) in den Kathodenraum (5) diffundierte Wasser wird im Wasserabscheider (29) aufgefangen und läßt sich während des Betriebs durch den Hahn (30) ablassen. Zum Wechsel von Elektrolysebetrieb zu Brennstoffzellenbetrieb wird die Zelle (1), ohne daß sie über einen äußeren Stromkreis verbunden ist, durch Drehen der 4-Wege-Hähne (13,14,15,16) in die Verbindung von Position "0" und "2" und öffnen der Ventile (31,32) mit Stickstoff gespült. Nach Schließen der Ventile (31,32) werden die Hähne (13,14,15,16) in die Verbindung von Position "0" und "3" gebracht, so daß Sauerstoff im Kreislauf durch den Kathodenraum (5) und Wasserstoff im Kreislauf durch den Anodenraum (6) geschickt wird. Die Gase werden den Gasspeichern (24,28) über jeweils einen Absperrhahn (33,34) und ein Druckminderventil (35,36) in den Gaskreislauf gegeben, der vor der Zelle (1) eine Befeuchter-Kondensator-Einheit (37,38) und hinter der Zelle (1) jeweils eine Gaspumpe (39,40) installiert hat. Mit dem Pluspol einer Stromsenke an der Kathodenseite (5) und dem Minuspol dieser Stromsenke an der Anodenseite (6) wird zur Aktivierung zwei Stunden ein Strom von 1 mA/cm² gezogen. Danach hat die Brennstoffzelle ihre volle Aktivität. Der umgekehrte Wechsel von Brennstoffzellenbetrieb zu Elektrolysebetrieb erfolgt in umgekehrter Reihenfolge des oben beschriebenen. Eine Aktivierungsphase ist nicht notwendig.

### Ausführungsbeispiele:

1.) Es wird eine Zelle mit einem Aufbau nach Fig. 1 verwendet. Die Zelle hat als Membran eine Kationenaustauschermembran und zwar Nafion ^{R}117 der Firma Du Pont. Diese Membran ist beidseitig mit je 5 mg/cm² Pt beschichtet. Als hydrophobe Struktur wird ein mit Teflon hydrophobiertes Graphitpapier benutzt. Das Stoffverteilungssystem besteht aus einer 1 mm dicken Sinterscheibe aus Titan mit einer mittleren Porengröße von 50 m. Es wurden 10 Zyklen mit jeweils 30 Minuten Elektrolyse- und 30 Minuten Brennstoffzellenvorgang im Wechsel vermessen. Die Zelle wurde in beiden Fällen galvanostatisch mit 100 mA/cm² belastet. Die Arbeitstemperaturen betrugen 80 °C, die Gasdrücke im Fall der Brennstoffzellenfunktion 2 bar. Für beide Funktionsarten wurden für die 10 Zyklen eine konstante Spennung gemessen. 10 Zyklentest: Pt / Pt, 80 °C, 2 bar Gasdrücke
   durchschnittliche Elektrolysespannung: 1,810 V ± 5 mV
   durchschnittliche Brennstoffzellenspannung: 0,905V ± 5 mV
2.) Wie bei Beispiel 1, nur daß die Membran einseitig auf der Kathodenseite mit 5 mg/cm² Pt beschichtet ist, und daß auf dem Titansinterkörper der Anodenseite 5 mg/cm² Rhodiumoxid aufgesintert wurde. 10 Zyklentest: Rhodiumoxid/Pt, 80 °C, 2 bar Gasdrücke
   durchschnittliche Elektrolysespannung: 1,685 ± 5 mV
   durchschnittliche Brennstoffzellenspannung: 0,875 ± 5 mV

### Bezugszeichen

- 1 -: Zelle
- 2 -: Kationenaustauschermembran
- 3 -: Katalysatorschicht
- 4 -: Hydrophobe Struktur
- 5 -: Kathodenseite
- 6 -: Anodenseite
- 7 -: Stoffverteilungssystem
- 8 -: Stromkollektoren
- 9,10-: Ein-bzw. Auslässe
- 11 -: Gehäuseteil
- 12 -: Drei-Wege-Hahn
- 13,14,15,16 -: Vier-Wege-Hahn
- 17 -: Pumpe
- 18 -: Wasserbehälter
- 19 -: Ventil
- 20 -: Druckpumpe
- 21 -: Gastrockner
- 22 -: Rückschlagventil
- 23 -: Absperrventil
- 24 -: O₂ Tank
- 25 -: Gastrockner
- 26 -: Rückschlagventil
- 27 -: Absperrventil
- 28 -: H₂ Tank
- 29 -: Wasserabscheider
- 30-: Ablaßhahn
- 31,32 -: Ventil
- 33,34 -: Absperrhahn
- 35,36 -: Druckminderventil
- 37,38 -: Befeuchter/Kondensator
- 39,40 -: Gaspumpe

## Patentansprüche

1. Verfahren zur Energiespeicherung und Energiewandlung mit einem H₂/O₂/H₂O System, durch Wechseln der Betriebsart Elektrolyse/Brennstoffreaktion, mit einer Zelle, bestehend aus einem Anodenraum, Kathodenraum und einer Ionenaustauschermembran als Elektrolyt,
**dadurch gekennzeichnet,**
daß im Anodenraum (6) eine bifunktionelle, Oxidationselektrode verwendet wird, an der im Elektrolysefall die Sauerstoffentwicklung und im Brennstoffzellen fall die Wasserstoffoxidation abläuft und im Kathodenraum (5) eine bifunktionelle Reduktionelektrode verwendet wird, an der im Elektrolysefall die Wasserstoffentwicklung und im Brennstoff zellen fall die Sauerstoff reduktion abläuft.

2. Verfahren nach Anspruch 1,
**dadurch gekennzeichnet,**
daß
a) im Elektrolysebetrieb Wasser durch den Anodenraum (6) geführt wird und
b) der dadurch entstehende Sauerstoff und Wasserstoff gespeichert wird, und
c) die Zelle (1) im Anschluß daran als Brennstoffzelle betrieben wird, wobei
d) der Wasserstoff und Sauerstoff einem Speicher (24,28) entnommen wird und
e) Wasserstoff durch den Anodenraum (6) und Sauerstoff durch den Kathodenraum (5) geführt wird, und
f) die Schritte a bis e beliebig oft aufeinanderfolgend durchgeführt werden.

3. Verfahren nach Anspruch 1,
**dadurch gekennzeichnet,**
daß
im Brennstoffzellenbetrieb
a) Wasserstoff und Sauerstoff einem externen Speicher entnommen wird und der Zelle (1) zugeführt wird und
b) Wasserstoff durch den Anodenraum (6) und Sauerstoff durch den Kathodenraum (5) geführt wird und
c) die Zelle (1) im Anschluß daran als Elektrolyseur betrieben wird, wobei Wasser durch den Anodenraum (6) geführt wird, und
d) der entstehende Sauerstoff Wasserstoff gespeichert wird, und
e) die Verfahrensschritte a) bis d) beliebig oft nacheinander durchgeführt werden.

4. Verfahren nach Anspruch 1 bis 3,
**dadurch gekennzeichnet,**
daß während des Elektrolysezyklusses destilliertes Wasser von einem Wasserbehälter (18) aus im Kreislauf durch den Anodenraum (6) geführt wird.

5. Verfahren nach Anspruch 1 bis 4,
**dadurch gekennzeichnet,**
daß im Bedarfsfall Wasser von einer externen Quelle in den Wasserbehälter (18) geführt werden kann.

6. Verfahren nach Anspruch 1 bis 5,
**dadurch gekennzeichnet,**
daß während des Elektrolysezyklusses der im Anodenraum (6) entstehende Sauerstoff, der von im Kreislauf zirkulierenden Wasser mitgeschleppt wird, in einem nachgeschalteten Gasabscheider (18) vom Wasser getrennt und anschließend dem Sauerstoffspeicher (24) zugeführt wird.

7. Verfahren nach Anspruch 1 bis 6
**dadurch gekennzeichnet,**
daß der Sauerstoff über einen dem Sauerstoffspeicher (24) vorgeschalteten Gastrockner (21) geführt wird.

8. Verfahren nach Anspruch 1 bis 7,
**dadurch gekennzeichnet,**
daß während des Elektrolysezyklusses das Wasser, das von den entstandenen Protonen durch die Ionenaustauschermembran (2) in den Kathodenraum (5) mitgeschleppt wird (Transferwasser), einem nachgeschalteten Wasserabscheider (29) zugeführt und der entstandene Wasserstoff in einem Wasserstoffspeicher (28) geleitet wird.

9. Verfahren nach Anspruch 8,
**dadurch gekennzeichnet,**
daß der Wasserstoff über einen dem Wasserstoffspeicher (28) vorgeschalteten Gastrockner (25) geführt wird.

10. Verfahren nach Anspruch 1 bis 9,
**dadurch gekennzeichnet,**
daß während des Brennstoffzellenzyklusses Sauerstoff im Kreislauf vom Sauerstoffspeicher (24) aus durch den Kathodenraum (5) und Wasserstoff vom Wasserstoffspeicher (28) aus im Kreislauf durch den Anodenraum (6)geführt wird.

11. Verfahren nach Anspruch 10,
**dadurch gekennzeichnet,**
daß der Sauerstoff bzw. der Wasserstoff vor der Einleitung in die Zelle (1) durch einen Befeuchter/Kondensator (37,38) geleitet wird.

12. Verfahren nach Anspruch 1 bis 11,
**dadurch gekennzeichnet,**
daß beim Wechsel der Betriebsart von Elektrolyse auf Brennstoffzellenanordnung oder umgekehrt eine Spülung in der Zelle (1) mit einem Inertgasstrom vorgenommen wird.

13. Verfahren nach Anspruch 1 bis 12,
**dadurch gekennzeichnet,**
daß bifunktionelle Oxidationselektroden verwendet werden, wobei eine Katalysatorschicht (3) auf einem porösen Träger aufgebracht wird.

14. Verfahren nach Anspruch 13,
**dadurch gekennzeichnet,**
daß die Katalysatorschicht (3) ausgewählt ist aus der Gruppe Platin, Iridium, Rhodium,Ruthenium, Palladium, Osmium, Rhenium und/oder deren Legierungen und/oder deren Oxide.

15. Verfahren nach Anspruch 1 bis 14,
**dadurch gekennzeichnet**,
daß die Zelle (1) auf der Kathodenseite (5) direkt auf der Katalysatorschicht (3) eine hydrophobe Struktur (4) besitzt.

16. Verfahren nach Anspruch 15,
**dadurch gekennzeichnet**,
daß die hydrophobe Struktur (4) ein Graphitpapier ist.

17. Verfahren nach Anspruch 1 bis 16,
**dadurch gekennzeichnet,**
daß die Zelle (1) ein Stoffverteilungssystem (7) wie poröses Sinterkörper aufweist.

18. Verfahren nach Anspruch 1 bis 17,
**dadurch gekennzeichnet,**
daß die Zelle (1) Stromkollektoren (8) bekannter Bauart aufweist.

## Claims

1. Process for storing and converting energy with an H₂/O₂/H₂O system by changing the operating mode electrolysis/fuel reaction, with a cell comprising an anode region, a cathode region and an ion-exchange membrane as electrolyte, characterised in that in said anode region (6) a dual-function oxidation electrode is used, at which the evolution of oxygen occurs in the case of electrolysis and the oxidation of hydrogen occurs in the case of the fuel cell, and in said cathode region (5) a dual-function reduction electrode is used, at which the evolution of hydrogen occurs in the case of electrolysis and the reduction of oxygen occurs in the case of the fuel cell.

2. Process according to Claim 1, characterised in that
a) during electrolysis, water is directed through the anode region (6) and
b) the oxygen and hydrogen formed thereby is stored, and
c) following this, the cell (1) is operated as a fuel cell, in which case
d) the hydrogen and oxygen are removed from a tank (24, 28) and
e) hydrogen is directed through the anode region (6) and oxygen is directed through the cathode region (5), and
f) steps a) to e) are implemented in succession as often as required.

3. Process according to Claim 1, characterised in that
a) during fuel cell operation, hydrogen and oxygen are removed from an external tank and fed to the cell (1), and
b) hydrogen is directed through the anode region (6) and oxygen is directed through the cathode region (5), and
c) following this, the cell (1) is operated as an electrolyser, in which case water is directed through the anode region (6), and
d) the oxygen and hydrogen formed are stored, and
e) process steps a) to d) are implemented in succession as often as required.

4. Process according to Claims 1 to 3, characterised in that during the electrolysis cycle, distilled water is directed from a water container (18) and circulated through the anode region (6).

5. Process according to Claims 1 to 4, characterised in that where required, water from an external source may be directed into the water container (18).

6. Process according to Claims 1 to 5, characterised in that during the electrolysis cycle, the oxygen formed in the anode region (6) and entrained in the circulating water is separated from the water in a gas trap (18) connected downstream and is subsequently fed to the oxygen tank (24).

7. Process according to Claims 1 to 6, characterised in that the oxygen is directed via a gas drier (21) connected upstream of the oxygen tank (24).

8. Process according to Claims 1 to 7, characterised in that during the electrolysis cycle, the water (transfer water) entrained through the ion-exchange membrane (2) into the cathode region (5) by the protons formed is fed to a water separator (29) connected downstream and the hydrogen formed is passed into a hydrogen tank (28).

9. Process according to Claim 8, characterised in that the hydrogen is directed through a gas drier (25) connected upstream of the hydrogen tank (28).

10. Process according to Claims 1 to 9, characterised in that during the fuel cell cycle, oxygen is circulated from the oxygen tank (24) through the cathode region (5) and hydrogen is circulated from the hydrogen tank (28) through the anode region (6).

11. Process according to Claim 10, characterised in that the oxygen or hydrogen is passed through a humidifier/condenser (37, 38) prior to being fed into the cell (1).

12. Process according to Claims 1 to 11, characterised in that when the operating mode is changed from electrolysis to fuel cell arrangement or vice versa, rinsing is carried out in the cell (1) using an inert gas flow.

13. Process according to Claims 1 to 12, characterised in that dual-function oxidation electrodes are used, in which case a catalyst layer (3) is applied to a porous carrier.

14. Process according to Claim 13, characterised in that the catalyst layer (3) is selected from the platinum group, iridium, rhodium, ruthenium, palladium, osmium, rhenium and/or their alloys and/or their oxides.

15. Process according to Claims 1 to 14, characterised in that the cell (1) has a hydrophobic structure (4) on the cathode side (5) directly on the catalyst layer (3).

16. Process according to Claim 15, characterised in that the hydrophobic structure (4) is a graphite paper.

17. Process according to Claims 1 to 16, characterised in that the cell (1) has a dispersion system (7) like porous sinter product.

18. Process according to Claims 1 to 17, characterised in that the cell (1) has current collectors (8) of known type.

## Revendications

1. Procédé pour l'emmagasinage et la transformation d'énergie avec un système H₂/O₂/H₂O, en alternant les types de fonctionnement électrolyse/réaction de combustible, avec une pile formée d'un espace anodique, d'un espace cathodique et d'une membrane échangeuse d'ions, comme électrolyte, caractérisé en ce qu'on utilise, dans l'espace anodique (6), une électrode bifonctionnelle d'oxydation, où se déroule la formation d'oxygène dans le cas de l'électrolyse et l'oxydation d'hydrogène dans le cas de la pile à combustible, et on utilise, dans l'espace cathodique (5), une électrode bifonctionnelle de réduction, où se déroule la formation d'hydrogène dans le cas de l'électrolyse et la réduction d'oxygène dans le cas de la pile à combustible.

2. Procédé selon la revendication 1, caractérisé en ce que :
a) en régime d'hydrolyse, de l'eau est amenée dans l'espace anodique (6) et
b) l'oxygène et l'hydrogène ainsi formés sont stockés, et
c) après cela, on actionne la pile comme une pile à combustible, auquel cas
d) l'hydrogène et l'oxygène sont prélevés d'un réservoir (24, 28), et
e) de l'hydrogène est amené dans l'espace anodique (6) et de l'oxygène est amené dans l'espace cathodique (5), et
f) on recommence successivement les étapes a) à e) aussi souvent qu'on le veut.

3. Procédé selon la revendication 1, caractérisé en ce que :
a) en régime de pile à combustible, de l'hydrogène et de l'oxygène sont prélevés d'un réservoir externe et amenés dans la pile (1), et
b) de l'hydrogène est amené dans l'espace anodique (6) et de l'oxygène est amené dans l'espace cathodique (5), et
c) après cela, la pile (1) est actionnée comme un électrolyseur, de l'eau étant amenée dans l'espace anodique (6) et
d) l'oxygène et l'hydrogène formés sont stockés, et
e) on recommence successivement les étapes a) à d) aussi souvent qu'on le veut.

4. Procédé selon l'une des revendications 1 à 3, caractérisé en ce que, pendant le cycle d'électrolyse, de l'eau distillée provenant d'un réservoir d'eau (18) est recyclée dans l'espace anodique (6).

5. Procédé selon l'une des revendications 1 à 4, caractérisé en ce qu'en cas de besoin, de l'eau peut être amenée dans le réservoir d'eau (18) par une source externe.

6. Procédé selon l'une des revendications 1 à 5, caractérisé en ce que, pendant le cycle d'électrolyse, l'oxygène formé dans l'espace anodique (6), qui est entraîné avec l'eau circulante, est séparé de l'eau dans un séparateur de gaz (18) monté en aval, et amené ensuite au réservoir à oxygène (24).

7. Procédé selon l'une des revendications 1 à 6, caractérisé en ce que l'oxygène est amené par l'intermédiaire d'un dessicateur de gaz (21) monté en amont du réservoir à oxygène (24).

8. Procédé selon l'une des revendications 1 à 7, caractérisé en ce que, pendant le cycle d'électrolyse, l'eau qui est entraînée (eau de transfert) dans l'espace cathodique (5) par les protons formés, en passant à travers la membrane échangeuse d'ions (2), est amenée à un séparateur d'eau (29) monté en aval, et l'hydrogène formé est dirigé dans un réservoir à hydrogène (28).

9. Procédé selon la revendication 8, caractérisé en ce que l'hydrogène est amené par l'intermédiaire d'un dessicateur de gaz (25) monté en amont du réservoir à hydrogène (28).

10. Procédé selon l'une des revendications 1 à 9, caractérisé en ce que, pendant le cycle de pile à combustible, de l'oxygène provenant du réservoir à oxygène (24) est recyclé dans l'espace cathodique (5), et de l'hydrogène provenant du réservoir à hydrogène (28) est recyclé dans l'espace anodique (6).

11. Procédé selon la revendication 10, caractérisé en ce que l'oxygène et l'hydrogène sont amenés dans un humidificateur/condensateur (37,38) avant d'être introduits dans la pile (1).

12. Procédé selon l'une des revendications 1 à 11, caractérisé en ce que lorsqu'on passe du fonctionnement en régime d'électrolyse au fonctionnement en régime de pile à combustible, ou inversement, on rince la pile (1) avec un flux de gaz inerte.

13. Procédé selon l'une des revendications 1 à 12, caractérisé en ce qu'on utilise des électrodes bifonctionnelles d'oxydation, une couche de catalyseur (3) étant appliquée sur un support poreux.

14. Procédé selon la revendication 13, caractérisé en ce qu'on choisit la couche de catalyseur (3) dans l'ensemble constitué par le platine, l'iridium, le rhodium, le ruthénium, le palladium, l'osmium, le rhénium et/ou leurs alliages et/ou leurs oxydes.

15. Procédé selon l'une des revendications 1 à 14, caractérisé en ce que la pile (1) possède une structure hydrophobe (4) du côté cathode (5), directement sur la couche de catalyseur (3).

16. Procédé selon la revendication 15, caractérisé en ce que la structure hydrophobe (4) est un papier au graphite.

17. Procédé selon l'une des revendications 1 à 16, caractérisé en ce que la pile (1) possède un système (7) de distribution des substances, comme un élément fritté poreux.

18. Procédé selon l'une des revendications 1 à 17, caractérisé en ce que la pile (1) possède des collecteurs de courant (8) ayant une structure d'un type connu.
